# EUROPÄISCHE PATENTSCHRIFT

(11) **EP 2 889 479 B1**
(45) Veröffentlichungstag und Bekanntmachung des Hinweises auf die Patenterteilung: **13.07.2016**
(21) Anmeldenummer: 14001885.4
(22) Anmeldetag: 30.05.2014
(51) Int. Cl.: F03G 7/04, F28F 25/02

(54) **Geothermiekraftwerksanlage, Verfahren zum Betrieb einer Geothermiekraftwerksanlage und Verfahren zum Erhöhen der Effizienz einer Geothermiekraftwerksanlage**
Geothermal power plant system, method for operating a geothermal power plant system and method for increasing the efficiency of a geothermal power plant system
Installation géothermique, procédé de fonctionnement d'une installation géothermique et procédé destiné à augmenter le rendement d'une installation géothermique

(43) Veröffentlichungstag der Anmeldung: 01.07.2015
(73) Patentinhaber: Balcke-Dürr GmbH, 40472 Düsseldorf (DE)
(72) Erfinder: Klitzing, Birger, 47807 Krefeld (DE); Wisse, Alexander, 5975RG Sevenum (NL)
(74) Vertreter: Heidler, Philipp

(56) Entgegenhaltungen:
- EP-B1- 0 162 993
- WO-A1-2010/001217
- WO-A1-2013/064162
- US-A1- 2014 075 937

## Beschreibung

Die Erfindung betrifft eine Geothermiekraftwerksanlage, ein Verfahren zum Betrieb einer Geothermiekraftwerksanlage sowie ein Verfahren zum Erhöhen der Effizienz einer nach dem ORC-Prinzip arbeitenden Geothermiekraftwerksanlage.

Die Druckschrift US 2014/0075937 wird als nächstliegender Stand der Technik angesehen.

Es besteht zunehmend der Bedarf, zur Energiegewinnung auch in größerem Umfang auf sogenannte regenerative Energiequellen zurückzugreifen. Eine in diesem Zusammenhang verbreitete Möglichkeit stellt die Nutzung von Erdwärme dar. Derartige Anlagen werden nachstehend als Geothermiekraftwerksanlagen bezeichnet. Üblicherweise greifen solche Geothermiekraftwerksanlagen zur Stromerzeugung vom Prinzip her auf den sogenannten Dampfturbinen-Prozess (*"Rankine Cycle*") zurück. Wesentliche Elemente sind dabei eine Verdampfungseinrichtung zur Gewinnung von Dampf mittels geothermischer Energie, eine Turbine, ein Kondensator sowie eine Speisepumpe. Der erzeugte Dampf wird dabei zum Antrieb der Turbine genutzt, die wiederum beispielsweise einen Generator zur Erzeugung elektrischer Energie antreibt. Der Dampf wird anschließend kondensiert und über die Speisepumpe dem Verdampfer erneut zugeführt, so dass sich insgesamt ein Kreisprozess bekannter Art ergibt. Insbesondere bei der Nutzung von Erdwärme als Energiequelle zur Verdampfung wird häufig auf den sogenannten organischen Rankine-Kreisprozess (*"Organic Rankine Cycle*"; ORC) zurückgegriffen, dessen wesentlicher Unterschied darin besteht, dass das Arbeitsfluid statt Wasserdampf eine organische Flüssigkeit mit im Vergleich zu Wasser niedrigerer Verdampfungstemperatur ist, wie beispielsweise insbesondere n-Pentan. Eine gattungsgemäße Geothermiekraftwerksanlage zeichnet sich somit dadurch aus, dass sie eine Versorgungsquelle mit geothermischer Energie umfasst, einen Verdampfer für ein Arbeitsfluid aufweist, in dem das Arbeitsfluid mit Hilfe geothermischer Energie verdampft wird, ein Leitungssystem vorhanden ist, in dem das Arbeitsfluid geführt wird, eine Turbine vorgesehen ist, die mit Hilfe des verdampften Arbeitsfluids angetrieben wird, ein luftgekühlter Kondensator stromabwärts der Turbine angeordnet ist, in dem das Arbeitsfluid in Förderrichtung hinter der Turbine kondensiert wird und eine Pumpe, mit der kondensiertes Arbeitsfluid dem Verdampfer zum Erhalt eines Kreisprozesses wieder rückgeführt wird.

Geothermische Energie bezeichnet dabei in der Erdkruste gespeicherte Wärme, die beispielsweise mittels Wasser oder ähnlichem, insbesondere Sole, an die Erdoberfläche gefördert wird und dadurch der Geothermiekraftwerksanlage zur Energiegewinnung zur Verfügung steht. Eine entsprechende Fördereinrichtung sowie die weiteren erforderlichen Mittel zur Verfügbarmachung der geothermischen Energie werden vorliegend allgemein als "Versorgungsquelle" bezeichnet. Der Verdampfer ist allgemein eine Einrichtung, in der mit Hilfe geothermischer Energie das Arbeitsfluid verdampft wird. Das Arbeitsfluid bezeichnet dasjenige Fluid, welches die Turbine antreibt. Mit Leitungssystem ist die Gesamtheit an Leitungen zur Führung des Arbeitsfluids zwischen den einzelnen Komponenten, wie insbesondere Verdampfer, Turbine, Kondensator und Pumpe, bezeichnet.

Ein wesentliches Element einer gattungsgemäßen Geothermiekraftwerksanlage ist ein luftgekühlter Kondensator, der stromabwärts der Turbine angeordnet ist. Der luftgekühlte Kondensator wird somit in Förderrichtung des Arbeitsfluids nach der Turbine von dem Arbeitsfluid passiert. Die zentrale Aufgabe des Kondensators liegt darin, das Arbeitsfluid zu kondensieren. Das das wärmeaufnehmende Medium des luftgekühlten Kondensators ist Luft, insbesondere Umgebungsluft, die beispielsweise mittels Ventilatoren an entsprechenden Wärmeaustauschelementen des Kondensators vorbeigeführt wird. Dabei findet ein Wärmeaustausch zwischen dem Arbeitsfluid und der Außenluft statt, wodurch eine Kondensation des Arbeitsfluids erreicht wird. Die Pumpe fördert das kondensierte Arbeitsfluid anschließend zum Verdampfer zurück, so dass das Arbeitsfluid insgesamt einen im Wesentlichen geschlossenen Kreislauf durchläuft. Die Verwendung luftgekühlter Kondensatoren hat sich insbesondere in Regionen mit Wasserknappheit bewährt, da diese keinen Wasserbedarf zu Kühlzwecken haben.

In Alternative zur Verwendung eines luftgekühlten Kondensators ist es ferner bekannt, einen wassergekühlten Kondensator zu verwenden. Wassergekühlte Kondensatoren zeichnen sich dadurch aus, dass das wärmeaufnehmende Medium Wasser ist. Die Verwendung einer Wasserkühlung ist insofern vorteilhaft, als dass dadurch die Effizienz der Geothermiekraftwerksanlage insgesamt gesteigert werden kann, da dass dampfförmige Arbeitsfluid auf niedrigere Temperaturen abgekühlt werden kann. Dies trifft insbesondere zu, wenn für die Bereitstellung des kalten Wassers ein Naßkühlturm verwendet wird. Nachteilig ist allerdings, dass ein Naßkühlturm typischerweise einen sehr hohen Wasserverbrauch aufweisen, der häufig aufgrund der geographischen Lage der Geothermiekraftwerksanlage nicht oder nur unter hohem Aufwand gedeckt werden kann.

Die verwendeten Kondensatoren sind dabei üblicherweise Oberflächenkondensatoren, insbesondere in Form von Rohrbündelwärmeüberträgern oder Plattenwärmetauschern.

Die Aufgabe der Erfindung liegt nun darin, eine Geothermiekraftwerksanlage anzugeben, die einerseits eine verbesserte Effizienz gegenüber herkömmlichen Anlagen aufweist und gleichzeitig auch in Regionen mit nur geringer Wasserverfügbarkeit wirtschaftlich eingesetzt werden kann.

Die Lösung der Aufgabe gelingt mit einer Geothermiekraftwerksanlage, einem Verfahren zum Betrieb einer Geothermiekraftwerksanlage sowie einem Verfahren zum Erhöhen der Effizienz einer insbesondere nach dem ORC-Prinzip arbeitenden Geothermiekraftwerksanlage gemäß den unabhängigen Ansprüchen. Bevorzugte Weiterbildungen sind in den abhängigen Ansprüchen angegeben. Zur Durchführung wird dabei besonders bevorzugt auf eine erfindungsgemäße Geothermiekraftwerksanlage zurückgegriffen.

Ein wesentlicher Grundgedanke der Erfindung besteht darin, ergänzend zum luftgekühlten Kondensator einen zusätzlichen wassergekühlten Kondensator vorzusehen. Damit verfügt die Geothermiekraftwerksanlage über zwei Kondensatoren, die an unterschiedliche Medien die Wärme überragen. Von zentraler Bedeutung ist dabei, dass der zusätzliche wassergekühlte Kondensator nicht in Serie sondern parallel zum luftgekühlten Kondensator angeordnet ist. Diese spezielle Anordnung ermöglicht es, dass das aus dem Generator austretende Arbeitsfluid parallel anteilig den luftgekühlten Kondensator und den wassergekühlten Kondensator durchströmt. Ein Teil des Arbeitsfluids wird somit stromabwärts zur Turbine unter Umgehung des luftgekühlten Kondensators zur Kondensation zum wassergekühlten Kondensator geführt. Der andere Teil des Arbeitsfluids durchströmt parallel dazu den luftgekühlten Kondensator unter Umgehung des wassergekühlten Kondensators. Das Arbeitsfluid wird somit vor dem Einströmen in die Kondensatoren in zwei Teilströme aufgeteilt, die entweder ausschließlich den luftgekühlten oder ausschließlich den wassergekühlten Kondensator zur Kondensation passieren. Erst stromabwärts der beiden Kondensatoren werden die Teilströme bzw. die entsprechenden Kondensate des Arbeitsfluids wieder zusammengeführt und anschließend über die Pumpe zum Verdampfer rückgeführt. Erfindungswesentlich ist somit, dass einerseits auf zwei Kondensatoren mit unterschiedlichen Kühlmedien (Luft und Wasser) zurückgegriffen wird und andererseits die Kondensation des Arbeitsfluids anteilig entweder nur von dem wassergekühlten Kondensator oder nur von dem luftgekühlten Kondensator erfolgt. Die beiden erfindungsgemäß vorgesehenen Kondensatoren sind somit vollständig und ausschließlich parallel zueinander verschaltet. Diese Grundanordnung führ dazu, dass durch die ergänzende Verwendung eines wassergekühlten Kondensators die Gesamtkühlleistung für das Arbeitsfluid gesteigert werden kann. Andererseits ist der Gesamtwasserbedarf zu Kühlzwecken vergleichsweise gering, da ergänzend der luftgekühlte Kondensator verwendet wird. Diese Gesamtanordnung ermöglicht eine hochgradige Anpassung der Gesamtkühlleistung an die jeweils vorliegenden Bedingungen, sei es hinsichtlich beispielsweise Außentemperaturen, aktueller Wasserverfügbarkeit und/oder Kraftwerksauslastung.

Ideal ist es dabei, wenn stromabwärts der Turbine im Leitungssystem eine Leitungsverzweigung vorhanden ist, mit einem zum luftgekühlten Kondensator führenden ersten Ausgang und mit einem zum wassergekühlten Kondensator führenden zweiten Ausgang. Das Arbeitsfluid wird somit zentral aus der Turbine abgeleitet und erst anschließend zur anteiligen Weiterleitung zu jeweils einem der beiden Kondensatoren durch die Leitungsverzweigung aufgeteilt. Dies erleichtert insbesondere, wie nachstehend noch weiter beschrieben, die Nachrüstung bestehender gattungsgemäßer Geothermiekraftwerksanlagen mit beispielsweise dem zusätzlichen wassergekühlten Kondensator.

Die Leitungsverzweigung kann zudem insbesondere ein Ansatzpunkt sein, die zum luftgekühlten und zum wassergekühlten geleiteten Teilströme des Arbeitsfluids zu variieren bzw. in ihrem Verhältnis zueinander, beispielsweise bezüglich des Volumenstroms, zu steuern. Vorzugsweise umfasst die Leitungsverzweigung daher wenigstens ein Ventil, über das das Verhältnis der aus den beiden Ausgängen der Leitungsverzweigung strömenden Teilvolumenströme des Arbeitsfluids zueinander veränderbar ist. Auf diese Weise kann beispielsweise auf eine bestehende übergangsweise Wasserknappheit in der Weise reagiert werden, dass der Anteil des zum luftgekühlten Kondensator geleiteten Arbeitsfluid erhöht und entsprechend der Anteil des zum wassergekühlten Kondensator geleiteten Arbeitsfluids gesenkt wird. Besonders bevorzugt bei dieser Ausführungsform ist es, wenn die Leitungsverzweigung baulich das Ventil unmittelbar mit umfasst. Die Leitungsverzweigung und das Ventil stellen dann eine gemeinsame Baueinheit mit der Funktion eines Stetigventils mit einem Eingang und zwei Ausgängen dar. Dadurch kann eine besonders kompakte Ausführungsform an dieser Stelle erhalten werden. Ergänzend oder alternativ kann es auch vorgesehen sein, dass stromabwärts der Leitungsverzweigung zum luftgekühlten Kondensator und/oder zum wassergekühlten Kondensator jeweils Ventile oder Absperrvorrichtungen zur Einstellung des jeweils zu den beiden Kondensatoren geleiteten Volumenstroms vorhanden sind. Die Steuerung der Aufteilung der Volumenströme kann ferner vorzugsweise derart erfolgen, dass einer der beiden Kondensatoren, vorzugsweise der wassergekühlte Kondensator, möglichst maximal ausgelastet ist und der luftgekühlte Kondensator den Rest des zu kondensierenden Arbeitsfluids übernimmt.

Grundsätzlich ist es ferner möglich, das aus dem luftgekühlten Kondensator und das aus dem wassergekühlten Kondensator stammende Kondensat jeweils individuell zum Verdampfer zu führen.

Auch hier ist es allerdings bevorzugt, wenn stromabwärts der beiden Kondensatoren im Leitungssystem eine Leitungsvereinigung vorhanden ist. Die Leitungsvereinigung zeichnet sich dadurch aus, dass über sie die Kondensate aus den beiden Kondensatoren vereinigt werden und anschließend über das Leitungssystem in einer gemeinsamen Leitung zur Pumpe geleitet werden. Hier wird dann entsprechend nur eine Pumpe benötigt. Auch diese Ausführungsform eignet sich insbesondere zu Nachrüstzwecken.

Die erfindungsgemäße Geothermiekraftwerksanlage kann ferner insbesondere in Bezug auf den Arbeitsfluidkreislauf weitere Elemente umfassen, die ergänzend zu dem vorstehend dargelegten Grundaufbau in das Gesamtsystem integriert werden können. Dies betrifft beispielsweise die bevorzugte Anordnung eines Wärmeübertragers, insbesondere in Strömungsrichtung des Arbeitsfluids zwischen der Turbine und dem luftgekühlten und/oder dem wassergekühlten Kondensator. Mit Hilfe dieses Wärmeübertragers ist es möglich, dem Arbeitsfluid Wärme zu entziehen, die für weitere Prozesse, beispielsweise zur Vorwärmung oder ähnliches, verwendet werden kann.

Selbstverständlich kann die erfindungsgemäße Geothermiekraftwerksanlage auch mehr als eine Turbine aufweisen. Wesentlich bei dieser Weiterbildung ist nun, dass vorzugsweise pro Turbine jeweils ein luftgekühlter und ein parallel zu diesem angeordneter wassergekühlter Kondensator in der vorstehend beschriebenen Weise vorhanden sind. Für jede Turbine stehen dann entsprechend jeweils ein luftgekühlter und ein wassergekühlter Kondensator zur Verfügung.

Grundsätzlich kann zur Wasserversorgung des wassergekühlten Kondensators auf das volle Spektrum der bekannten Alternativen zurückgegriffen werden. Es hat sich allerdings als besonders bevorzugt erwiesen, wenn das Kühlwasser des wassergekühlten Kondensators in einem Kühlwasserkreislauf geführt wird. Dadurch kann der Wasserbedarf und -Verbrauch der erfindungsgemäßen Geothermiekraftwerksanlage erheblich gesenkt werden, so dass die Anordnung auch durchaus in Regionen mit geringen Wasserressourcen eingesetzt werden kann.

Wesentlich für eine effektive Wasserkühlung ist eine möglichst niedrige Kühlwassertemperatur. Dies gelingt besonders effektiv, wenn die Wasserkühlung des Kühlwasserkreislaufes mit Hilfe eines Nasskühlturms erfolgt. Derartige Nasskühltürme sind vom Grundsatz her bekannt und beispielsweise in der EP 0 162 993 B1 beschrieben, auf die hiermit lediglich beispielhaft Bezug genommen wird.

Um die Unabhängigkeit einer erfindungsgemäßen Geothermiekraftwerksanlage von einer kontinuierlichen externen Kühlwasserversorgung zu steigern, umfasst der Kühlwasserkreislauf vorzugsweise ein Wasserreservoir, in dem Wasser zu Kühlzwecken vorrätig gehalten werden kann. Das Wasserreservoir stellt somit eine Art Versorgungspuffer für das Kühlwasser dar. In der praktischen Anwendung hat sich nun gezeigt, dass die Speicherkapazität des Wasserreservoirs vorzugsweise derart ausgelegt ist, dass es zur Aufnahme des maximalen Kühlwasserverbrauchs im Bereich von wenigstens einer Stunde bis maximal 20 Stunden liegt. Der maximale Wasserverbrauch hängt stark von der Gesamtauslegung der jeweiligen Geothermiekraftwerksanlage ab, insbesondere auch von den lokalen Gegebenheiten, wobei ein typischer Durchschnittswert hier beispielsweise bei 50m³/h liegt. Insbesondere im Hinblick auf übergangsweise Ausfälle einer externen Kühlwasserversorgung und zur Abdeckung vorübergehender Spitzenverbräuche (z.B. in den Mittagsstunden) hat sich eine solche Auslegung der Speicherkapazität erwiesen. Damit können die meisten Ausfallzeiten überbrückt werden und die Gesamtgröße des Wasserreservoirs überschreitet dann in der Regel noch nicht eine wirtschaftliche Größe.

Dabei ist es insbesondere für den Fall, dass mehrere Turbinen angetrieben werden und pro Turbine jeweils ein wassergekühlter und ein luftgekühlter Kondensator zur Verfügung stehen, bevorzugt, wenn zur Versorgung der wassergekühlten Kondensatoren auf einen gemeinsamen Kühlwasserkreislauf mit entsprechenden Abzweigungen zurückgegriffen wird. Besonders bevorzugt versorgt damit somit ein Nasskühlturm die wassergekühlten Kondensatoren mehrere Turbinen mit Kühlwasser.

Die Versorgung der erfindungsgemäßen Geothermiekraftwerksanlage kann ebenfalls mannigfaltig variiert werden. So kann zum Ausgleich von Wasserverlusten von Kühlwasser im Kühlwasserkreislauf insbesondere auch auf Sole, Kondensat und/oder aufbereitetes Wasser zurückgegriffen werden.

Bei der erfindungsgemäßen Geothermiekraftwerksanlage handelt es sich vorzugsweise um eine ORC-Anlage. Derartige Anlagen zeichnen sich dadurch aus, dass ihnen der sogenannte *Organic Rankine Cycle* (organischer Rankine Kreisprozess) zugrunde liegt, bei dem auf organische Fluide als Arbeitsfluid, insbesondere organische Kohlenwasserstoffe, wie ganz besonders n-Pentan, oder hallogenierte Kohlenwasserstoffe zurückgegriffen wird. Der Vorteil dieser Arbeitsfluide liegt in ihrer niedrigeren Verdampfungstemperatur, wodurch eine effektivere Ausnutzung geothermischer Energie möglich ist.

Ein weiterer Aspekt der Erfindung liegt in einem Verfahren zum Betrieb einer Geothermiekraftwerksanlage. Die Geothermiekraftwerksanlage ist dabei vorzugsweise gemäß den vorstehenden Ausführungen ausgebildet. Das erfindungsgemäße Verfahren umfasst zunächst das Verdampfen eines Arbeitsfluids, insbesondere eines organischen Arbeitsfluids, in einem Verdampfer mit Hilfe geothermischer Energie. Mit Hilfe des verdampften Arbeitsfluids erfolgt im nächsten Schritt das Betreiben einer Turbine, an die üblicherweise ein Generator zur Erzeugung elektrischer Energie angeschlossen ist. Wesentlich ist nun, das erfindungsgemäß stromabwärts der Turbine das Auftrennen des Arbeitsfluids in einen zu einem luftgekühlten Kondensator geleiteten Fluidteilstrom und einen zu einem wassergekühlten Kondensator geleiteten Fluidteilstrom erfolgt. Das Arbeitsfluid wird somit nach dem Austreten aus der Turbine nicht mehr gemeinsam in einem Kondensator gekühlt, sondern anteilig jeweils in einem luftgekühlten Kondensator oder in einem wassergekühlten Kondensator. Das Arbeitsfluid wird somit parallel in zwei unterschiedlichen Kondensatoren gekühlt und durchläuft dabei nicht nacheinander beide Kondensatoren. Vorzugsweise werden die beiden kondensierten Fluidteilströme stromabwärts der beiden Kondensatoren noch vor der Passage einer Pumpe wieder zusammengeführt und anschließend zum Verdampfer gemeinsam rückgeführt. Dadurch wird ein Kreislauf geschlossen, wobei hier insbesondere unter Verwendung eines organischen Arbeitsfluids vorzugsweise auf ein ORC-Verfahren zurückgegriffen wird.

Das Kühlen des wassergekühlten Kondensators erfolgt idealerweise durch in einem Kühlwasserkreislauf mit einem Nasskühlturm zirkuliertes Wasser. Durch den Rückgriff auf einen Kühlwasserkreislauf kann der Kühlwasserbedarf zur Durchführung des erfindungsgemäßen Verfahrens erheblich gesenkt werden. Ein Nasskühlturm zeichnet sich dabei durch seine hohe Kühleffizienz aus. Vollständig kann bei der Verwendung eines Kühlwasserkreislaufes häufig allerdings dennoch nicht auf eine externe Wasserversorgung verzichtet werden. Um die Abhängigkeit des erfindungsgemäßen Verfahrens von einer kontinuierlichen externen Wasserversorgung jedoch noch weiter zu senken, erfolgt im Betrieb des Kühlwasserkreislaufes vorzugsweise ein Zwischenspeichern von Kühlwasser in einem Wasserspeicher stromabwärts des Nasskühlturms. Durch das Zwischenspeichern wird somit eine vorgegebene Menge Kühlwasser vorrätig gehalten, wobei dieser Kühlwasservorrat zum Ausgleich von Versorgungsengpässen einer externen Wasserversorgung genutzt werden kann. Das Ermitteln der bevorzugten Speicherkapazität erfolgt dabei optimalerweise anhand des maximalen Wasserverbrauchs pro Stunde, wobei die Speicherkapazität vorzugsweise dem maximalen Verbrauch im Bereich von einer bis zwanzig Stunden liegt.

Das erfindungsgemäße Verfahren kann besonders vorteilhaft genutzt werden, wenn im Betrieb der Geothermiekraftwerksanlage ein Regeln des Verhältnisses der Fluidteilströme zum luftgekühlten und zum wassergekühlten Kondensator erfolgt. Der jeweilige Anteil des Arbeitsfluids, der zum luftgekühlten oder zum wassergekühlten Kondensator geleitet wird, wird bei dieser bevorzugten Weiterbildung des erfindungsgemäßen Verfahrens somit verändert. Damit kann auf sich ändernde Betriebsbedingungen besonders effizient reagiert werden. Insbesondere erfolgt die Regelung des Verhältnisses dabei in Abhängigkeit von beispielsweise der Außentemperatur der Umgebungsluft und/oder der Temperatur des Arbeitsfluids eingangsseitig zum Verdampfer und/oder dem Füllstand eines Wasserspeichers für Kühlwasser. Insbesondere letztere Weiterbildung des erfindungsgemäßen Verfahrens ist dann besonders relevant, wenn der Füllstand des Wasserspeichers für Kühlwasser sehr niedrig ist. Es kann dann beispielsweise schrittweise auf eine Erhöhung des dem luftgekühlten Kondensator zugeführten Arbeitsfluid umgeschaltet werden, um beispielsweise eine vollständige Entleerung des Wasserspeichers zu verhindern.

Ein weiterer Grundgedanke der Erfindung liegt schließlich auch in einem Verfahren zum Erhöhen der Effizienz einer nach dem ORC-Prinzip arbeitenden Geothermiekraftwerksanlage mit Hilfe einer geeigneten Nachrüstung. Ausgangspunkt bildet hier insbesondere eine gattungsgemäße Geothermiekraftwerksanlage mit einem luftgekühlten Kondensator zum Kondensieren eines Arbeitsfluids stromabwärts eines Generators. Zum Aufbau einer gattungsgemäßen Geothermiekraftwerksanlage wird auf die vorstehenden Ausführungen Bezug genommen. Wesentlich ist nun, dass sich die erfindungsgemäße Weiterbildung der Geothermiekraftwerksanlage, wie sie vorstehend beschrieben worden ist, sehr gut zur Nachrüstung bestehender Geothermiekraftwerksanlagen eignet. Wesentlich zur Einbindung des zusätzlichen wassergekühlten Kondensators ist dabei zunächst das Einbringen einer Leitungsverzweigung stromabwärts des Generators vor dem luftgekühlten Kondensator in eine bestehende Leitung zum Aufteilen des Arbeitsfluidstroms in zwei Fluidteilströme. Dadurch ist es möglich, aus dem Fluidstrom des Arbeitsfluids, der aus dem Generator austritt, einen Volumenanteil abzuzweigen und dem nachzurüstenden wassergekühlten Kondensator zuzuführen. Es ist ferner vorgesehen, stromaufwärts einer Pumpe eine Leitungsvereinigung in das bestehende Leitungssystem einzubringen, die die Zusammenführung der aufgetrennten Teilvolumenströme des Arbeitsfluids in Strömungsrichtung hinter dem luftgekühlten Kondensator und dem wassergekühlten Kondensator ermöglicht. Abschließend erfolgt ein Anschließen eines wassergekühlten Kondensators zwischen der Leitungsverzweigung und der Leitungsvereinigung parallel zum luftgekühlten Kondensator. Damit kann, sofern die gattungsgemäße Geothermiekraftwerksanlage bereits einen Kreislauf mit einem Arbeitsfluid mit luftgekühltem Kondensator umfasst, der ergänzende und parallel zu verwendende wassergekühlte Kondensator nachgerüstete werden.

In einer bevorzugten Weiterbildung des erfindungsgemäßen Verfahrens ist es dabei vorgesehen, dass ferner ein Anschließen des wassergekühlten Kondensators an einen Kühlwasserkreislauf mit insbesondere einem Nasskühlturm erfolgt. Dadurch lassen sich die vorstehend bereits beschriebenen Vorteile eines Kühlwasserkreislaufes zur Kühlung des wassergekühlten Kondensators erhalten.

Selbstverständlich ist es auch möglich, eine bestehende Geothermiekraftwerksanlage mit einem bereits vorhandenen wassergekühlten Kondensator sukzessive mit einem luftgekühlten Kondensator nachzurüsten. Hierbei erfolgt entsprechend das Anschließen eines luftgekühlten Kondensators gemäß den vorstehenden Ausführungen zum wassergekühlten Kondensator.

Nachstehend wird die Erfindung anhand der in den Figuren angegebenen Ausführungsbeispiele näher beschrieben. Es zeigen schematisch:
- Figur 1: ein Aufbauschema einer Ausführungsform einer erfindungsgemäßen Geothermiekraftwerksanlage;
- Figur 2: ein Aufbauschema einer Ausführungsform einer zweiten erfindungsgemäßen Geothermiekraftwerksanlage;
- Figur 3: ein Ablaufschema zum Durchführen des erfindungsgemäßen Verfahrens zum Betrieb einer Geothermiekraftwerksanlage; und
- Figur 4: ein Ablaufdiagramm zum Nachrüsten einer bestehenden Geothermiekraftwerksanlage.

Gleiche Bauteile sind in den Figuren mit gleichen Bezugszeichen angegeben, wobei nicht jedes sich wiederholende Bauteil separat bezeichnet ist.

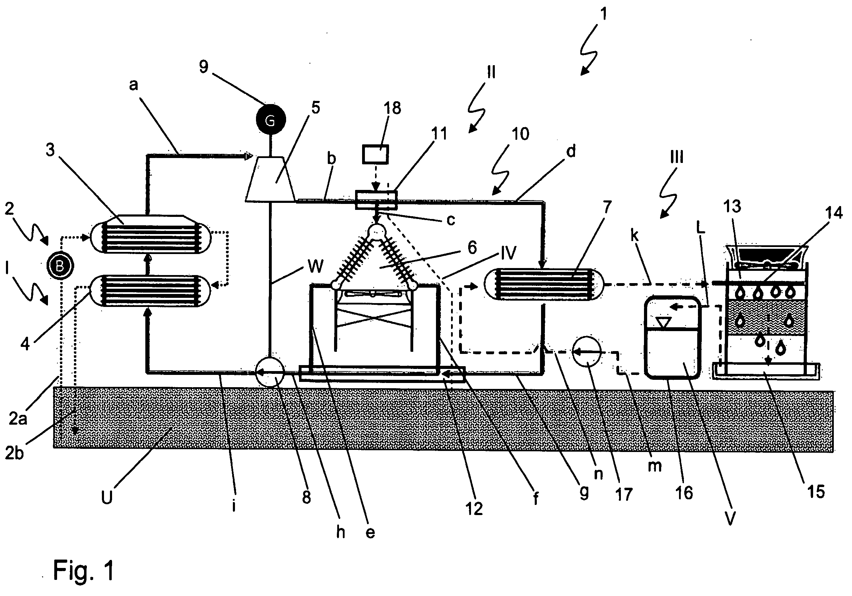

Figur 1 zeigt den Aufbau eines Ausführungsbeispiels einer erfindungsgemäßen Geothermiekraftwerksanlage 1. Wesentliche Elemente der Geothermiekraftwerksanlage 1 sind zunächst eine Versorgungsquelle 2 mit geothermischer Energie, umfassend eine Zuleitung 2a und eine Rückführleitung 2b. Mit Hilfe der Versorgungsquelle 2 kann Erdwärme aus dem Erdinneren, beispielsweise in Form von erwärmter Salzsole B aus dem Erdboden bzw. dem Untergrund U gefördert werden. Im vorliegenden Ausführungsbeispiel wird die erwärmte Salzsole zunächst einem Verdampfer 3 und anschließend einem optionalen Vorwärmer 4 zugeführt und wieder in den Bodenuntergrund rückgeführt. Dadurch wird ein Wärmeversorgungskreislauf I erhalten. Ein weiteres wesentliches Element der Geothermiekraftwerksanlage 1 ist ein Arbeitsfluidkreislauf II. Der Arbeitsfluidkreislauf II ist zur Durchführung eines ORC-Verfahrens ausgebildet und umfasst neben dem Verdampfer 3 und dem optionalen Vorwärmer 4 in Förderrichtung des Arbeitsfluids eine Turbine 5, einen luftgekühlten Kondensator 6 sowie einen wassergekühlten Kondensator 7 und eine Förderpumpe 8. Über die Turbine 5 wird ein Generator 9 zur Stromerzeugung angetrieben. Gleichzeitig ist eine Antriebsverbindung W zwischen der Turbine 5 und der Förderpumpe 8 vorhanden, über die der Pumpenantrieb der Förderpumpe 8 gewährleistet wird. Diese Verbindung kann mechanischer oder elektrischer Natur sein. Zwischen diesen wesentlichen Komponenten wird das organische Arbeitsfluid in einem Kreislaufprozess in einem Leitungssystem bewegt und passiert nach der Verdampfung im Verdampfer 3 über den Leitungsabschnitt a zunächst die Turbine 5. Anschließend leitet der Leitungsabschnitt b das Arbeitsfluid zu einer Leitungsverzweigung 11, durch die ein erster Teilstrom des Arbeitsfluids über den Leitungsabschnitt c dem luftgekühlten Kondensator 6 zugeführt wird und ein anderer zweiter Fluidteilstrom über den Leitungsabschnitt d dem wassergekühlten Kondensator 7 zugeführt wird. Das kondensierte Arbeitsfluid aus dem luftgekühlten Kondensator 6 wird über die Leitungsabschnitte e und f in eine Leitungsvereinigung 12 geleitet, in die auch das Kondensat aus dem wassergekühlten Kondensator 7 über den Leitungsabschnitt g mündet. Die vereinten Kondensate des Arbeitsfluids verlassen die Leitungsvereinigung 12 über den Leitungsabschnitt h und werden dort der Förderpumpe 8 zugeführt, die das Arbeitsfluid über den Leitungsabschnitt i zunächst dem Vorwärmer 4 und anschließend dem Verdampfer 3 wieder zuführt. Die Gesamtheit der Leitungsabschnitte a bis i bezeichnet dabei das Leitungssystem 10, in dem das Arbeitsfluid zwischen den einzelnen Funktionseinheiten, wie beispielsweise dem Verdampfer, der Förderpumpe, der Turbine und den beiden Kondensatoren geleitet wird.

Wesentlich an diesem Grundaufbau ist nun, dass das Arbeitsfluid stromabwärts zur Leitungsverzweigung 11 anteilig entweder ausschließlich dem luftgekühlten Kondensator 6 oder parallel dazu dem wassergekühlten Kondensator 7 über die Leitungsabschnitte c und d zugeführt wird. Der von der Turbine kommende Volumenstrom des Arbeitsfluids wird somit in zwei Teilströme aufgeteilt, die räumlich und funktional getrennt und zeitgleich im Wesentlichen gleichzeitig zueinander dem Kondensationsprozess unterworfen werden. Dadurch ergibt sich eine parallele Anordnung des luftgekühlten Kondensators 6 und des wassergekühlten Kondensators 7. Eine sukzessive Passage beider Kondensatoren 6 und 7 durch das Arbeitsfluid ist ausgeschlossen und auch nicht vorgesehen. Über die Leitungsvereinigung 12 werden die Kondensatströme des Arbeitsfluids stromabwärts des luftgekühlten Kondensators 6 und des wassergekühlten Kondensators 7 wieder vereint und gemeinsam über die Förderpumpe 8 dem Verdampfungsprozess wieder zugeführt. Die Leitungsvereinigung 12 weist somit insgesamt drei Fluideingänge auf, wobei zwei dem luftgekühlten Kondensator 6 zuzuordnen sind (Rohrabschnitte e und f) und einer dem wassergekühlten Kondensator 7 (Leitungsabschnitt g).

Sowohl der luftgekühlte Kondensator 6 als auch der wassergekühlte Kondensator 7 sind als Oberflächenkondensatoren ausgebildet. Eine Vermischung des Kühlmediums mit dem Arbeitsfluid findet somit nicht statt. Das Kühlmedium des luftgekühlten Kondensators 6 ist Außenumgebungsluft und das Kühlmedium des wassergekühlten Kondensators 7 ist Kühlwasser. Letzteres wird im vorliegenden Ausführungsbeispiel innerhalb eines Kühlwasserkreislaufes III zirkuliert. Wesentliche Elemente des Kühlwasserkreislaufes sind ein Nasskühlturm umfassend eine Verteilungseinrichtung 14, ein Sammelbecken 15, ein Wasserreservoir 16 (wobei das Wasserreservoir 16 auch unmittelbar Teil des Sammelbeckens 15 sein kann), eine Kühlwasserpumpe 17 und den wassergekühlten Kondensator 7. Das Kühlwasser wird dabei über ein Leitungssystem mit den Leitungsabschnitten k (zwischen wassergekühltem Kondensator 7 und Nasskühlturm 13) L (zwischen Sammelbecken 15 und Wasserreservoir 16) m (zwischen dem Wasserreservoir 16 und der Kühlwasserpumpe 17) und n (zwischen der Kühlwasserpumpe 17 und dem wassergekühlten Kondensator 7) geleitet. Wesentlich für den vorliegenden Grundaufbau ist das Wasserreservoir 16, dessen Speichervolumen V idealerweise im Bereich "1 Stunde x VBₘₐₓ < = V < = 20 Stunden x VBₘₐₓ entspricht". Der maximale Wasserverbrauch VBₘₐₓ entspricht dabei der vom Betreiber vorgegebenen maximal zur Verfügung stehenden Wassermenge in Kubikmeter pro Stunde. Dieser Wert ist anlagenspezifisch und wird üblicherweise vom Auftraggeber der Geothermiekraftwerksanlage 1 vorgegeben. Ein typischer Wert beträgt beispielsweise 50 m³/h.

Im vorliegenden Ausführungsbeispiel weist die Geothermiekraftwerksanlage 1 ferner eine Steuereinrichtung 18 auf, die ein nicht näher dargestelltes Ventil innerhalb der Leistungsverzweigung 11 steuert. Mit Hilfe der Steuereinrichtung 18 kann über das Ventil somit der Anteil des zum luftgekühlten Kondensator 6 und zum wassergekühlten Kondensator 7 geleiteten Arbeitsfluids (Volumenstrom) variiert werden. Steuergrößen, die von der Steuereinrichtung 18 berücksichtigt werden können, sind beispielsweise die Temperatur der Außenumgebungsluft, der Füllstand des Wasserreservoirs 16, die Temperatur des Arbeitsfluids im Leitungsabschnitt b und /oder im Leitungsabschnitt h etc.

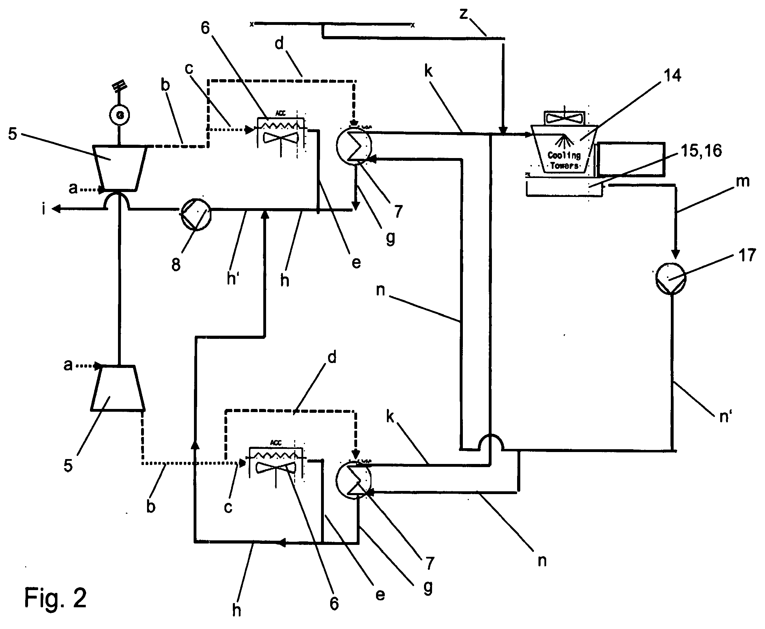

Fig. 2 betrifft eine Ausführungsvariante zum Ausführungsbeispiel aus Fig. 1, wobei nachstehend lediglich die Unterschiede herausgestellt werden und ansonsten auf die vorstehenden Ausführungen Bezug genommen wird. Dargestellt ist die Anlage ab dem Leitungsabschnitt a und bis zum Leitungsabschnitt i im ORC-Kreislauf, so dass der Kreislauf I in Fig. 2 aus Übersichtlichkeitsgründen nicht angegeben ist.

Die Geothermiekraftwerksanlage 1 aus Fig. 2 umfasst insgesamt zwei Turbinen 5, die gemeinsam einen Generator G antreiben. Das aus den beiden Turbinen 5 ausströmende Arbeitsfluid wird in zueinander getrennten Kühlkreisläufen jeweils pro Turbine 5 in einem luftgekühlten und in einem wassergekühlten Kondensator 6, 8 gekühlt. Anschließend werden die Kondensate beider Kreisläufe im Leitungsabschnitt h' zusammengeführt und zentral wieder dem Verdampfungsvorgang durch geothermische Energie unterworfen. Jede Turbine 5 weist somit ihre eigenen Kondensatoren 6 und 7 auf.

Eine weitere Besonderheit liegt darin, dass der Kühlwasserkreislauf der beiden wassergekühlten Kondensatoren 7 in einem gemeinsamen Nasskühlturm 14 zusammenläuft. Beide Kondensatoren werden somit gemeinsam von einem Kühlwasserkreislauf mit Kühlwasser über den Leitungsabschnitt n' versorgt, der in einer entsprechenden Leitungsverzweigung in die Leitungsabschnitte n zu den beiden wassergekühlten Kondensatoren 7 mündet. In Fig. 2 ist ferner mit dem Leitungsabschnitt z eine Zuführleitung angegeben, mit der Wasserverluste innerhalb des Kühlwasserkreislaufes ausgeglichen werden können. Hierzu kann beispielsweise auf Sole, Kondensate und/oder aufbereitetes Wasser zurückgegriffen werden. Die für diese Versorgung zur Verfügung stehende Wassermenge gibt letztlich den Wert VBₘₐₓ vor.

Beim Nasskühlturm 14 aus Fig. 2 ist das Sammelbecken 15 ferner so groß ausgebildet, dass es gleichzeitig als Wasserreservoir 16 fungiert. Ein zum Sammelbecken 15 separates und räumlich getrenntes Wasserreservoir 16 ist entsprechend nicht mehr erforderlich.

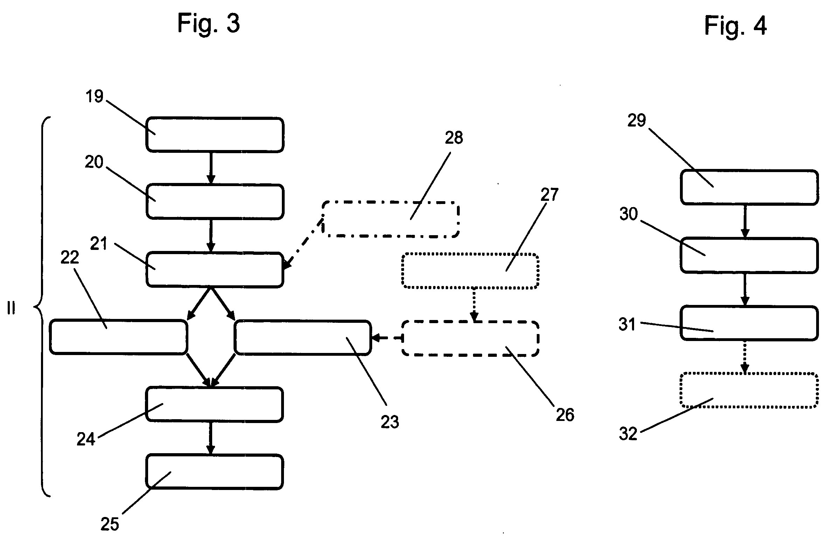

Figur 3 verdeutlicht den Verfahrensablauf zum Betrieb der Geothermiekraftwerksanlage 1. Die wesentlichen Verfahrensschritte sind dabei zunächst das Verdampfen des Arbeitsfluids in dem Verdampfer 3 im Schritt 19 mit Hilfe geothermischer Energie. Anschließend erfolgt das Betreiben 20 der Turbine 5 mit Hilfe des im Schritt 19 verdampften Arbeitsfluids. Nach dem Austreten des Arbeitsfluids aus der Turbine 5 bzw. stromabwärts der Turbine 5 erfolgt nun im Schritt 21 ein Auftrennen des Arbeitsfluids in einen zu dem luftgekühlten Kondensator 6 geleiteten Fluidteilstrom und einen zu dem wassergekühlten Kondensator 7 geleiteten Fluidteilstrom. Die beiden Fluidteilströme werden nun zueinander parallel in den Schritten 22 (im luftgekühlten Kondensator 6) und 23 (im wassergekühlten Kondensator 7) kondensiert. Das Kondensieren erfolgt jedoch räumlich und funktional getrennt zueinander unter Rückgriff auf die beiden Kondensatoren 6 und 7, die zueinander unterschiedliche Kühlmedien, konkret Wasser und Luft, aufweisen. Die Kondensate beider kondensierten Fluidteilströme werden im Schritt 24 stromabwärts der beiden Kondensatoren 6 und 7 wieder vereint und anschließend im Schritt 25 gemeinsam wieder dem Verdampfer 3 zugeführt. Der Kreisprozess ist damit geschlossen.

Die Schritte 26, 27 und 28 geben nun bevorzugte Weiterbildungen dieses Verfahrens an. So kann insbesondere der wassergekühlte Kondensator 7 im Schritt 23 in einem Kühlwasserkreislauf III gemäß den vorstehenden Ausführungen, insbesondere umfassend einen Nasskühlturm 13 integriert werden, wobei hier optional ferner zusätzlich das übergansweise Zwischenspeichern 27 von Kühlwasser in einem Wasserspeicher 16 vorgesehen sein kann. Damit kann die Betriebszuverlässigkeit des erfindungsgemäßen Verfahrens erheblich verbessert werden.

Im Schritt 28 ist als weitere bevorzugte Weiterbildungsalternative eine Steuerung des Auftrennens 21 des Arbeitsfluids in die zwei Fluidteilströme vorgesehen. Dazu wird beispielsweise das Ventil in der Leitungsverzweigung 11 gesteuert und dadurch der Volumenstromanteil des zum luftgekühlten Kondensators 6 geleiteten Fluidteilstroms im Verhältnis zu dem zum wassergekühlten Kondensator 7 geleiteten Fluidteilstroms verändert. Dieser Schritt kann Teil eines Regelprozesses sein, der eine entsprechende Steuerung in Abhängigkeit von Regelgrößen, wie beispielsweise der Außentemperatur der Umgebungsluft und weiterer Größen sein kann.

Die vorstehend beschriebenen Geothermiekraftwerksanlage 1 kann auch über ein Nachrüstverfahren einer konventionellen Geothermiekraftwerksanlage 1, die beispielsweise nur einen luftgekühlten Kondensator 6 zur Kondensation des Arbeitsfluids vorsieht, erhalten werden. Die für die Nachrüstung wesentlichen Schritte 29, 30 und 31 sind in Figur 4 näher angegeben. An ein Einbringen 29 der Leitungsverzweigung 11 stromabwärts der Turbine 5 vor dem bereits vorhandenen luftgekühlten Kondensator 6 schließt sich im Schritt 30 ein Einbringen der Leitungsvereinigung 12 stromaufwärts der Pumpe 8 an, so dass dadurch insgesamt zkwei Anschlüsse für den im Schritt 31 anzuschließenden zusätzlichen wassergekühlten Kondensator 7 zwischen der Leitungsverzweigung 11 und der Leitungsvereinigung 12 erhalten werden. Dadurch gelingt eine Parallelschaltung des luftgekühlten Kondensators 6 zum wassergekühlten Kondensator 7.

Im Nachrüstprozess optional kann ferner gemäß Schritt 32 das Anschließen des wassergekühlten Kondensators 7 an den Kühlwasserkreislauf III, insbesondere umfassend den Nasskühlturm 13, erfolgen.

Der Nachrüstvorgang bzw. die Nachrüstschnittstellen sind in Figur 1 mit der gestrichelten Linie IV näher veranschaulicht. Nachzurüsten ist somit gemäß dem Verfahren aus Figur 3 der Bereich rechts der gestrichelten Linie IV inklusive der Leitungsverzweigung 11 und der Leitungsvereinigung 12.

Eine nicht näher ausgeführte Alternative dieses Nachrüstverfahrens kann selbstverständlich auch darin bestehen, dass der luftgekühlte Kondensator 6 zu einem wassergekühlten Kondensator 7 ergänzend nachgerüstet wird.

## Patentansprüche

1. Geothermiekraftwerksanlage (1) umfassend
- eine Versorgungsquelle (2) mit geothermischer Energie,
- einen Verdampfer (3) für ein Arbeitsfluid, in dem das Arbeitsfluid mit Hilfe geothermischer Energie verdampft wird,
- ein Leitungssystem (10), in dem das Arbeitsfluid geführt wird,
- eine Turbine (5), die mit Hilfe des verdampften Arbeitsfluids angetrieben wird,
- einen luftgekühlten Kondensator (6) stromabwärts der Turbine (5), in dem Arbeitsfluid kondensiert wird, und
- eine Pumpe (8), mit der kondensiertes Arbeitsfluid zum Verdampfer (3) rückgeführt wird **dadurch gekennzeichnet,**
**dass** ein zum luftgekühlten Kondensator (6) parallel geschalteter wassergekühlter Kondensator (7) vorhanden ist, und dass ein Teil des Arbeitsfluids stromabwärts zur Turbine (5) unter Umgehung des luftgekühlten Kondensators (6) zur Kondensation zum wassergekühlten Kondensator (7) geführt wird, und dass die Kondensate des Arbeitsfluids vom luftgekühlten Kondensator (6) und vom wassergekühlten Kondensator (7) stromabwärts der beiden Kondensatoren (6,7) zusammengeführt und anschließend über die Pumpe (8) zum Verdampfer (3) rückgeführt werden.

2. Geothermiekraftwerksanlage (1) gemäß Anspruch 1,
**dadurch gekennzeichnet,**
**dass** stromabwärts der Turbine (5) im Leitungssystem (10) eine Leitungsverzweigung (11) vorhanden ist, mit einem zum luftgekühlten Kondensator (6) führenden ersten Ausgang und mit einem zum wassergekühlten Kondenstor (7) führenden zweiten Ausgang.

3. Geothermiekraftwerksanlage (1) gemäß Anspruch 2,
**dadurch gekennzeichnet,**
**dass** die Leitungsverzweigung (11) ein Ventil umfasst, über das das Verhältnis der aus den beiden Ausgängen strömenden Volumenströme zueinander steuerbar ist.

4. Geothermiekraftwerksanlage (1) gemäß einem der vorhergehenden Ansprüche,
**dadurch gekennzeichnet,**
**dass** stromabwärts der beiden Kondensatoren (6,7) im Leitungssystem (10) eine Leitungsvereinigung (12) vorhanden ist, über die die Kondensate aus den beiden Kondensatoren (6,7) vereinigt werden und anschließend über das Leitungssystem (10) gemeinsam zur Pumpe (8) geleitet werden.

5. Geothermiekraftwerksanlage (1) gemäß einem der vorhergehenden Ansprüche,
**dadurch gekennzeichnet,**
**dass** in Strömungsrichtung des Arbeitsfluids zwischen der Turbine (5) und dem luftgekühlten und/oder dem wassergekühlten Kondensator (6,7) ein Wärmeübertrager angeordnet ist, mit dem dem Arbeitsfluid Wärmeenergie entzogen werden kann.

6. Geothermiekraftwerksanlage (1) gemäß einem der vorhergehenden Ansprüche,
**dadurch gekennzeichnet,**
**dass** das Kühlwasser des wassergekühlten Kondensators (7) in einem Kühlwasserkreislauf (III) geführt wird.

7. Geothermiekraftwerksanlage (1) gemäß Anspruch 6,
**dadurch gekennzeichnet,**
**dass** der Kühlwasserkreislauf (III) einen Nasskühlturm (13) umfasst.

8. Geothermiekraftwerksanlage (1) gemäß einem der Ansprüche 6 oder 7,
**dadurch gekennzeichnet,**
**dass** der Kühlwasserkreislauf (III) ein Wasserreservoir (16) umfasst, dessen Speicherkapazität (V) derart ausgelegt ist, dass es zur Aufnahme des maximalen Kühlwasserverbrauchs (VBₘₐₓ) im Bereich von wenigstens einer Stunde bis maximal 20 Stunden, insbesondere wenigstens zwei Stunden bis maximal 10 Stunden, liegt.

9. Geothermiekraftwerksanlage (1) gemäß einem der vorhergehenden Ansprüche,
**dadurch gekennzeichnet,**
**dass** die Geothermiekraftwerksanlage (1) eine ORC-Anlage ist, wobei das Arbeitsfluid insbesondere ein organischer Kohlenwasserstoff, ganz besonders n-Pentan, oder ein halogenierter Kohlenwasserstoff ist.

10. Verfahren zum Betrieb einer Geothermiekraftwerksanlage (1), insbesondere gemäß einem der vorhergehenden Ansprüche, umfassend die folgenden Schritte
a) Verdampfen (19) eines Arbeitsfluids in einem Verdampfer (3) mit Hilfe geothermischer Energie;
b) Betreiben (20) einer Turbine (5) mit Hilfe des verdampften Arbeitsfluids;
c) stromabwärts der Turbine (5) Auftrennen(21) des Arbeitsfluids in einen zu einem luftgekühlten Kondensator (6) geleiteten Fluidteilstrom und einen zu einem wassergekühlten Kondensator (7) geleiteten Fluidteilstrom;
d) zueinander paralleles Kondensieren (22,23) der beiden Fluidteilströme im luftgekühlten Kondensator (6) und im wassergekühlten Kondensator (7);
d) Vereinen (24) der beiden Fluidteilströme stromabwärts der beiden Kondensatoren (6,7); und
e) Rückführen (25) des Arbeitsfluids zum Verdampfer (3).

11. Verfahren gemäß Anspruch 10,
**dadurch gekennzeichnet,**
**dass** zum Kühlen (26) des wassergekühlten Kondensators (7) auf einen Kühlwasserkreislauf (III) mit einem Nasskühlturm (13) zurückgegriffen wird.

12. Verfahren gemäß Anspruch 11,
**dadurch gekennzeichnet,**
**dass** der Betrieb des Kühlwasserkreislaufes (III) ein Zwischenspeichern (27) von Kühlwasser in einem Wasserspeicher (16) stromabwärts des Nasskühlturms (13) umfasst.

13. Verfahren gemäß einem der Ansprüche 10 bis 12,
**dadurch gekennzeichnet,**
**dass** im Betrieb der Geothermiekraftwerksanlage (1) eine Regeln (28) des Verhältnisses der Fluidteilströme zum luftgekühlten und zum wassergekühlten Kondensator (6,7) erfolgt, insbesondere in Abhängigkeit von der Außentemperatur und/oder der Temperatur des Arbeitsfluids eingangsseitig zum Verdampfer (3) und/oder dem Füllstand eines Wasserspeichers (16) für Kühlwasser.

14. Verfahren zum Erhöhen der Effizienz einer nach dem ORC-Prinzip arbeitenden Geothermiekraftwerksanlage mit einem luftgekühlten Kondensator (6) zum Kondensieren eines Arbeitsfluids stromabwärts eines Generators (5), insbesondere zum Erhalt einer Geothermiekraftwerksanlage (1) gemäß einem der Ansprüche 1 bis 9 und zum Durchführen des Verfahrens gemäß einem der Ansprüche 10 bis 13,
umfassend
a) Einbringen (29) einer Leitungsverzweigung (11) stromabwärts des Generators (5) vor dem luftgekühlten Kondensator (6) zum Aufteilen des Arbeitsfluidstroms in zwei Fluidteilströme;
b) Einbringen (30) einer Leitungsvereinigung (12) stromaufwärts einer Pumpe (8), mit der das Arbeitsfluid zu einem Verdampfer (3) geleitet wird, zum Vereinen der zwei Fluidteilströme;
c) Anschließen (31) eines wassergekühlten Kondensators (7) zwischen der Leitungsverzweigung (11) und der Leitungsvereinigung (12) parallel zum luftgekühlten Kondensator (6).

15. Verfahren gemäß Anspruch 14,
**dadurch gekennzeichnet,**
**dass** ferner ein Anschließen (32) des wassergekühlten Kondensators (7) an einen Kühlwasserkreislauf (III) mit einem Nasskühlturm (13) erfolgt.

## Claims

1. A geothermal power plant facility (1) comprising
- a geothermal energy supply source (2),
- a vaporizer (3) for a working fluid in which the working fluid is vaporized with the aid of geothermal energy,
- a line system (10) in which the working fluid is guided,
- a turbine (5) which is driven with the aid of the vaporized working fluid,
- an air-cooled condenser (6) downstream of the turbine (5) in which working fluid is condensed, and
- a pump (8) using which condensed working fluid is returned to the vaporizer (3), **characterized in that**
a water-cooled condenser (7) is provided which is connected in parallel to the air-cooled condenser (6), and that a part of the working fluid is guided to the water-cooled condenser (7) for condensation downstream of the turbine (5) while bypassing the air-cooled condenser (6), and that the condensates of the working fluid from the air-cooled condenser (6) and from the water-cooled condenser (7) are guided together downstream of the two condensers (6, 7) and are subsequently returned via the pump (8) to the vaporizer (3).

2. The geothermal power plant facility (1) according to claim 1,
**characterized in that**
a line branching point (11) having a first outlet leading to the air-cooled condenser (6) and having a second outlet leading to the water-cooled condenser (7) is provided in the line system (10) downstream of the turbine (5).

3. The geothermal power plant facility (1) according to claim 2,
**characterized in that**
the line branching point (11) comprises a valve via which the ratio of the two volume flows flowing out of the two outlets in relation to one another can be controlled.

4. The geothermal power plant facility (1) according to any one of the preceding claims, **characterized in that**
downstream of the two condensers (6, 7) in the line system (10), a line unification point (12) is provided via which the condensates from the two condensers (6, 7) are unified and subsequently conducted via the line system (10) jointly to the pump (8).

5. The geothermal power plant facility (1) according to any one of the preceding claims, **characterized in that**
a heat exchanger, using which thermal energy can be withdrawn from the working fluid, is arranged, as regarded in the flow direction of the working fluid, between the turbine (5) and the air-cooled and/or the water-cooled condenser (6, 7).

6. The geothermal power plant facility (1) according to any one of the preceding claims, **characterized in that**
the cooling water of the water-cooled condenser (7) is guided in a cooling water circuit (III).

7. The geothermal power plant facility (1) according to claim 6,
**characterized in that**
the cooling water circuit (III) comprises a wet cooling tower (13).

8. The geothermal power plant facility (1) according to any one of claims 6 or 7,
**characterized in that**
the cooling water circuit (III) comprises a water reservoir (16), the storage capacity (V) of which is designed such that it is to accommodate the maximum cooling water consumption (VBₘₐₓ) in the range of at least 1 hour to at most 20 hours, in particular at least 2 hours to at most 10 hours.

9. The geothermal power plant facility (1) according to any one of the preceding claims, **characterized in that**
the geothermal power plant facility (1) is an ORC facility, wherein the working fluid is in particular an organic hydrocarbon, very particularly n-pentane, or a halogenated hydrocarbon.

10. A method for operating a geothermal power plant facility (1), in particular according to any one of the preceding claims, comprising the following steps:
a) vaporizing (19) a working fluid in a vaporizer (3) with the aid of geothermal energy;
b) operating (20) a turbine (5) with the aid of the vaporized working fluid;
c) downstream of the turbine (5), separating (21) the working fluid into a partial fluid flow conducted to an air-cooled condenser (6) and a partial fluid flow conducted to a water-cooled condenser (7);
d) condensing (22, 23) the two partial fluid flows in parallel to one another in the air-cooled condenser (6) and in the water-cooled condenser (7);
d) unifying (24) the two partial fluid flows downstream of the two condensers (6, 7); and
e) returning (25) the working fluid to the vaporizer (3).

11. The method according to claim 10,
**characterized in that**
a cooling water circuit (III) having a wet cooling tower (13) is used for cooling (26) the water-cooled condenser (7).

12. The method according to claim 11,
**characterized in that**
the operation of the cooling water circuit (III) comprises a temporary storage (27) of cooling water in a water tank (16) downstream of the wet cooling tower (13).

13. The method according to any one of claims 10 to 12,
**characterized in that**
in operation of the geothermal power plant facility (1), a closed-loop control (28) of the ratio of the partial fluid flows to the air-cooled and to the water-cooled condensers (6, 7) is performed, in particular as a function of the external temperature and/or the temperature of the working fluid on the inlet side of the vaporizer (3) and/or the fill level of a water tank (16) for cooling water.

14. A method for increasing the efficiency of a geothermal power plant facility operating according to the ORC principle with an air-cooled condenser (6) for condensing a working fluid downstream of a generator (5), in particular to obtain a geothermal power plant facility (1) according to any one of claims 1 to 9 and to carry out the method according to any one of claims 10 to 13,
comprising
a) introducing (29) a line branching point (11) downstream of the generator (5) before the air-cooled condenser (6) for separating the working fluid flow into two partial fluid flows;
b) introducing (30) a line unification point (12) upstream of a pump (8) using which the working fluid is conducted to a vaporizer (3), for unifying the two partial fluid flows;
c) connecting (31) a water-cooled condenser (7) between the line branching point (11) and the line unification point (12) in parallel to the air-cooled condenser (6).

15. The method according to claim 14,
**characterized in that**
further a connection (32) of the water-cooled condenser (7) to a cooling water circuit (III) having a wet cooling tower (13) is performed.

## Revendications

1. Installation géothermique (1) comprenant:
- une source (2) d'alimentation en énergie géothermique,
- un vaporisateur (3) pour un fluide de travail, dans lequel le fluide de travail est vaporisé avec l'aide de l'énergie géothermique,
- un système de canalisations (10) dans lequel est guidé le fluide de travail,
- une turbine (5) qui est entraînée avec l'aide du fluide de travail vaporisé,
- un condenseur à air (6) situé en aval de la turbine (5), dans lequel est condensé le fluide de travail, et
- une pompe (8) avec laquelle le fluide de travail condensé est renvoyé au vaporisateur (3), **caractérisée en ce que**
un condenseur à eau (7) est présent, qui est relié en parallèle au condenseur à air (6), et **en ce que** une partie du fluide de travail est guidée vers le condenseur à eau (7) pour une condensation en aval de la turbine (5) tout en évitant le condenseur à air (6), et **en ce que** les condensats du fluide de travail provenant du condenseur à air (6) et du condenseur à eau (7) sont guidés ensemble en aval des deux condenseurs (6, 7) et sont ensuite renvoyés au vaporisateur (3) au moyen de la pompe (8).

2. Installation géothermique (1) selon la revendication 1,
**caractérisée en ce que**
un point (11) de jonction de canalisations ayant une première sortie menant au condenseur à air (6) et ayant une seconde sortie menant au condenseur à eau (7) est présent dans le système de canalisations (10) en aval de la turbine (5).

3. Installation géothermique (1) selon la revendication 2,
**caractérisée en ce que**
le point (11) de jonction de canalisations comprend une vanne grâce à laquelle le rapport entre les deux volumes s'écoulant des deux sorties peut être contrôlé.

4. Installation géothermique (1) selon l'une quelconque des revendications précédentes, **caractérisée en ce que**
en aval des deux condenseurs (6, 7) dans le système de canalisations (10), un point (12) de convergence des canalisations est présent grâce auquel les condensats provenant des deux condenseurs (6, 7) sont réunis et ensuite amenés conjointement jusqu'à la pompe (8) grâce au système de canalisations (10).

5. Installation géothermique (1) selon l'une quelconque des revendications précédentes, **caractérisée en ce que**
un échangeur de chaleur grâce auquel l'énergie thermique peut être tirée du fluide de travail, est placé, dans la direction d'écoulement du fluide de travail, entre la turbine (5) et le condenseur à air et/ou le condenseur à eau (6, 7).

6. Installation géothermique (1) selon l'une quelconque des revendications précédentes, **caractérisée en ce que**
l'eau de refroidissement du condenseur à eau (7) est guidée dans un circuit (III) d'eau de refroidissement.

7. Installation géothermique (1) selon la revendication 6,
**caractérisée en ce que**
le circuit (III) d'eau de refroidissement comprend une tour de refroidissement par voie humide (13).

8. Installation géothermique (1) selon l'une quelconque des revendications 6 ou 7, **caractérisée en ce que**
le circuit (III) d'eau de refroidissement comprend un réservoir d'eau (16) dont la capacité de stockage (V) est calculée de telle sorte qu'il puisse contenir la consommation maximale d'eau de refroidissement (VBₘₐₓ) dans une plage d'au moins 1 heure jusqu'à au plus 20 heures, et en particulier d'au moins 2 heures jusqu'à au plus 10 heures.

9. Installation géothermique (1) selon l'une quelconque des revendications précédentes, **caractérisée en ce que**
l'installation géothermique (1) est une installation ORC (ORC : à cycle organique Rankine), dans laquelle le fluide de travail est en particulier un hydrocarbure organique, tout spécialement du n-pentane, ou un hydrocarbure halogéné.

10. Procédé de fonctionnement d'une installation géothermique (1), en particulier selon l'une quelconque des revendications précédentes, comprenant les étapes suivantes:
a) vaporisation (19) d'un fluide de travail dans un vaporisateur (3) avec l'aide d'énergie géothermique;
b) exploitation (20) d'une turbine (5) avec l'aide du fluide de travail vaporisé;
c) en aval de la turbine (5), séparation (21) du fluide de travail en un flux partiel de fluide conduit jusqu'à un condenseur à air (6) et en un flux partiel de fluide conduit jusqu'à un condenseur à eau (7);
d) condensation (22, 23) des deux flux partiels de fluide en parallèle l'un avec l'autre dans le condenseur à air (6) et dans le condenseur à eau (7);
d) réunion (24) des deux flux partiels de fluide en aval des deux condenseurs (6, 7); et
e) renvoi (25) du fluide de travail au vaporisateur (3).

11. Procédé selon la revendication 10,
**caractérisé en ce que**
un circuit (III) d'eau de refroidissement équipé d'une tour (13) de refroidissement par voie humide est utilisé pour refroidir (26) le condenseur à eau (7).

12. Procédé selon la revendication 11,
**caractérisé en ce que**
le fonctionnement du circuit (III) d'eau de refroidissement comprend un stockage temporaire (27) d'eau de refroidissement dans un réservoir (16) d'eau en aval de la tour (13) de refroidissement par voie humide.

13. Procédé selon l'une quelconque des revendications 10 à 12,
**caractérisé** enceque
pendant le fonctionnement de l'installation géothermique (1), un contrôle (28) en boucle fermée du rapport des flux partiels de fluide vers les condenseurs à air et à eau (6, 7) est effectué, en particulier en fonction de la température extérieure et/ou de la température du fluide de travail sur le côté entrée du vaporisateur (3) et/ou du niveau de remplissage d'un réservoir d'eau (16) pour de l'eau de refroidissement.

14. Procédé destiné à augmenter le rendement d'une installation géothermique fonctionnant selon le principe ORC (cycle organique Rankine) avec un condenseur à air (6) destiné à condenser un fluide de travail en aval d'un générateur (5), en particulier pour obtenir une installation géothermique (1) selon l'une quelconque des revendications 1 à 9, et pour mettre en oeuvre le procédé selon l'une quelconque des revendications 10 à 13,
comprenant
a) l'introduction (29) d'un point (11) de jonction de canalisations en aval du générateur (5) avant le condenseur à air (6) pour séparer le flux du fluide de travail en deux flux partiels de fluide;
b) l'introduction (30) d'un point (12) de convergence des canalisations en amont d'une pompe (8) grâce à laquelle le fluide de travail est conduit à un vaporisateur (3), pour réunir les deux flux partiels de fluide;
c) le raccordement (31) d'un condenseur à eau (7) entre le point (11) de jonction de canalisations et le point (12) de convergence des canalisations en parallèle avec le condenseur à air (6).

15. Procédé selon la revendication 14,
**caractérisé en ce que**
en outre un raccordement (32) du condenseur à eau (7) avec un circuit (III) d'eau de refroidissement équipé d'une tour (13) de refroidissement par voie humide est réalisé.
